# EUROPEAN PATENT APPLICATION

(11) **EP 4 554 269 A1**
(43) Date of publication of application: **14.05.2025**
(21) Application number: 22950286.9
(22) Date of filing: 08.07.2022
(51) Int. Cl.: H04W 16/28, H04W 72/232

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/027071
(87) International publication number: WO 2024/009492

(57) **Abstract**

A terminal according to an aspect of the present disclosure includes: a receiving section that receives information indicating enabling of transform precoding for eight-port transmission; and a control section that controls the eight-port transmission with transform precoding applied. An aspect of the present disclosure allows UL transmission using more than four antenna ports to be appropriately controlled.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio **(NR),"** "3GPP Rel. 15 (or later **versions),"** and the like) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, uplink (UL) Multi Input Multi Output (MIMO) transmission with up to four layers is supported. For future NR, in order to achieve higher spectrum efficiency, supporting UL transmission with more than four layers is under study. For example, for Rel-18 NR, transmission with six rank at maximum using six antenna ports, transmission with six or eight rank at maximum using eight antenna ports, and the like are under study.

Regarding UL transmission using more than four antenna ports, however, progress has not been made with studies on how to determine a precoding matrix. For example, progress has not been made with a study including whether transform precoding is possible to be configured to be enabled for the UL transmission. Unless this is made clear, an increase in communication throughput may be suppressed.

In view of this, the present disclosure has one object to provide a terminal, a radio communication method, and a base station that enable appropriate control of UL transmission using more than four antenna ports.

### Solution to Problem

A terminal according to an aspect of the present disclosure includes: a receiving section that receives information indicating enabling of transform precoding for eight-port transmission; and a control section that controls the eight-port transmission with transform precoding applied.

### Advantageous Effects of Invention

An aspect of the present disclosure allows UL transmission using more than four antenna ports to be appropriately controlled.

### Brief Description of Drawings

[FIG. 1] FIG. 1 is a diagram to show an example of association between codebook subsets and TPMI indices.
[FIG. 2] FIG. 2 corresponds to a table of precoding matrices W for single-layer (rank 1) transmission using two antenna ports in Rel-16 NR.
[FIG. 3] FIGS. 3A and 3B are each a diagram to show an example of a correspondence relation between values in a precoding-information-and-number-of-layers field and the numbers of layers and TPMIs in Rel-16 NR.
[FIG. 4] FIGS. 4A to 4D are each a diagram to show an example of a correspondence relation between values in an antenna port field and information related to a DMRS in Rel-16 NR.
[FIG. 5] FIG. 5 is a diagram to show an example of a codebook according to a second embodiment.
[FIG. 6] FIGS. 6A and 6B are each a diagram to show an example of a correspondence relation between values in a precoding-information-and-number-of-layers field and the numbers of layers and TPMIs according to a third embodiment.
[FIG. 7] FIG. 7 is a diagram to show an example of a correspondence relation between values in an antenna port field and information related to a DMRS according to a fourth embodiment.
[FIG. 8] FIG. 8 is a diagram to show an example of a schematic structure of a radio communication system according to one embodiment.
[FIG. 9] FIG. 9 is a diagram to show an example of a structure of a base station according to one embodiment.
[FIG. 10] FIG. 10 is a diagram to show an example of a structure of a user terminal according to one embodiment.
[FIG. 11] FIG. 11 is a diagram to show an example of a hardware structure of the base station and the user terminal according to one embodiment.
[FIG. 12] FIG. 12 is a diagram to show an example of a vehicle according to one embodiment.

### Description of Embodiments

### (Control of Transmission of SRS and PUSCH)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of a periodic SRS (P-SRS), a semi-persistent SRS (SP-SRS), and an aperiodic CSI (Aperiodic SRS (A-SRS)). Note that the UE may transmit a P-SRS and an SP-SRS periodically (or periodically after activation) and may transmit an A-SRS on the basis of an SRS request of DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook based or non-codebook based uplink shared channel (Physical Uplink Shared Channel (PUSCH)) transmission based on an SRI.

For example, in a case of codebook based transmission (codebook-based transmission), the UE may determine a precoder (precoding matrix) for the PUSCH transmission on the basis of an SRI, a transmitted rank indicator (TRI), and a transmitted precoding matrix indicator (TPMI). In a case of non-codebook based transmission (non-codebook-based transmission), the UE may determine a precoder for the PUSCH transmission on the basis of an SRI.

The SRS resource information may include an SRS resource ID (SRS-ResourceId), the number of SRS ports, an SRS port number, a transmission Comb, SRS resource mapping (for example, a time and/or frequency resource position, resource offset, a resource periodicity, the number of times of repetition, the number of SRS symbols, an SRS bandwidth, or the like), hopping-related information, an SRS resource type, a sequence ID, spatial relation information of the SRS, and the like.

The spatial relation information of the SRS (for example, an RRC information element "spatialRelationInfo") may indicate spatial relation information between a certain reference signal and the SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include, as an index for the certain reference signal, at least one of an SSB index, a CSI-RS resource ID, and an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information of the SRS may include a serving cell index corresponding to the certain reference signal, a BWP index (BWP ID), and the like.

With respect to a certain SRS resource, in a case where the UE is configured with spatial relation information related to an SSB or CSI-RS and the SRS, the UE may transmit the SRS resource by using a spatial domain filter (spatial domain transmission filter) the same as a spatial domain filter (spatial domain reception filter) for reception of the SSB or CSI-RS. In this case, the UE may assume that a UE receive beam for the SSB or CSI-RS is the same as a UE transmit beam for the SRS.

With respect to a certain SRS (target SRS) resource, in a case where the UE is configured with spatial relation information related to another SRS (reference SRS) and the SRS (target SRS), the UE may transmit the target SRS resource by using a spatial domain filter (spatial domain transmission filter) the same as a spatial domain filter (spatial domain transmission filter) for transmission of the reference SRS. In other words, in this case, the UE may assume that a UE transmit beam for the reference SRS is the same as a UE transmit beam for the target SRS.

The UE may determine, based on a value of a certain field (for example, SRS resource indicator (SRI) field) in DCI (for example, DCI format 0_1), a spatial relation of a PUSCH scheduled by the DCI. Specifically, the UE may use, for PUSCH transmission, the spatial relation information (for example, an RRC information element "spatialRelationInfo") of the SRS resource determined based on the certain field value (for example, SRI).

In Rel-15/16 NR, in a case where codebook based transmission is used for a PUSCH, the UE may be configured with an SRS resource set for codebook usage including two SRS resources at maximum by RRC, and may be indicated with one of the two SRS resources at maximum by DCI (one-bit SRI field). A transmit beam for the PUSCH may be specified by an SRI field.

The UE may judge a TPMI and the number of layers (transmission rank) for the PUSCH on the basis of a precoding-information-and-number-of-layers field (hereinafter, also referred to as a "precoding information field"). From an uplink codebook for the number of ports the same as the number of SRS ports indicated by a higher layer parameter "nrofSRS-Ports" configured for an SRS resource specified by the SRI field described above, the UE may select a precoder on the basis of the TPMI, the number of layers, and the like.

In Rel-15/16 NR, in a case where non-codebook based transmission is used for a PUSCH, the UE may be configured with an SRS resource set for non-codebook usage including four SRS resources at maximum by RRC, and may be indicated with one or more of the four SRS resources at maximum by DCI (two-bit SRI field).

The UE may determine the number of layers (transmission rank) for the PUSCH, based on the SRI field. For example, the UE may judge that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook based PUSCH transmission or use non-codebook based PUSCH transmission by a higher layer parameter "txConfig" indicating a transmission scheme. The parameter may indicate a value of "codebook" or "non-codebook **(nonCodebook)."**

In the present disclosure, a codebook based PUSCH (codebook based PUSCH transmission, codebook based transmission) may mean a PUSCH when the UE is configured with "codebook" as a transmission scheme. In the present disclosure, a non-codebook based PUSCH (non-codebook based PUSCH transmission, non-codebook based transmission) may mean a PUSCH when the UE is configured with "non-codebook" as a transmission scheme.

### (Determination of PUSCH Precoder in Codebook (CB) Based Transmission)

As described above, in a case of codebook (CB) based transmission, a UE may determine a precoder for PUSCH transmission on the basis of an SRI, a TRI, a TPMI, and the like.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH.

The TRI and the TPMI may be specified by a precoding-information-and-number-of-layers field ("Precoding information and number of layers" field) of the DCI. For simplicity, the "precoding-information-and-number-of-layers field" is also referred to as a "precoding information field."

The UE may report UE capability information related to a precoder type and be configured, by a base station, with the precoder type based on the UE capability information by higher layer signaling. The UE capability information may be information about a precoder type to be used by the UE in the PUSCH transmission (for example, which may be indicated by an RRC parameter "pusch-TransCoherence").

The UE may determine a precoder to be used for the PUSCH transmission on the basis of information about a precoder type (for example, an RRC parameter "codebookSubset") included in PUSCH configuration information (for example, "PUSCH-Config" information element of RRC signaling) notified by higher layer signaling. The UE may be configured with a subset of a PMI specified by a TPMI, by the "codebookSubset."

Note that the precoder type may be specified by any one of full coherent (fully coherent), partial coherent, and non-coherent (non coherent), or a combination of at least two of them (which may be indicated, for example, by a parameter such as "fullyAndPartialAndNonCoherent" or "partialAndNonCoherent").

For example, the RRC parameter "pusch-TransCoherence" indicating a UE capability may indicate full coherent (fullCoherent), partial coherent (partialCoherent), or non-coherent (nonCoherent). The RRC parameter "codebookSubset" may indicate "fullyAndPartialAndNonCoherent," "partialAndNonCoherent," or "nonCoherent."

Full coherent may mean that all the antenna ports to be used for transmission are synchronized (which may be expressed as all the antenna ports are able to be matched in terms of phase, are able to be phase-controlled per coherent antenna port, are able to be appropriately applied with a precoder per coherent antenna port, or the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

In the present disclosure, a precoder type, coherency, PUSCH transmission coherence, a coherent type, a coherence type, a codebook type, a codebook subset, a codebook subset type, and the like may be interchangeably interpreted.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

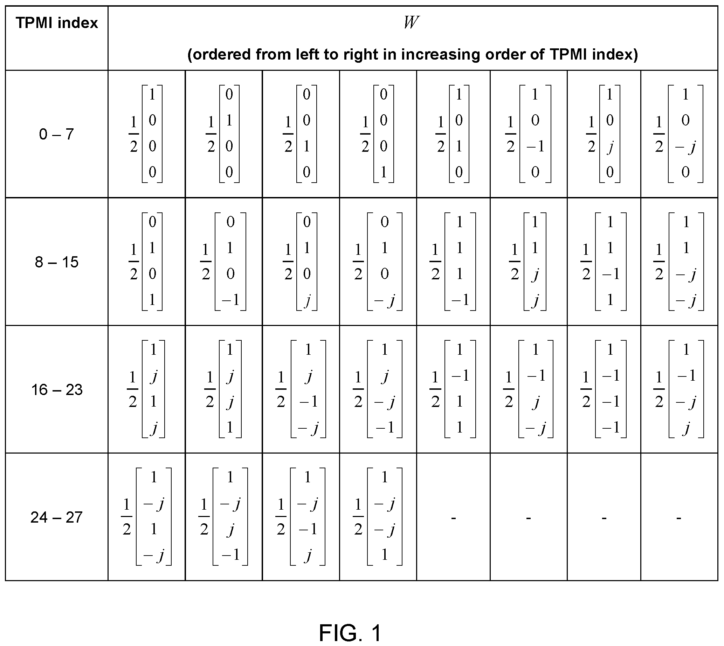

FIG. 1 is a diagram to show an example of association between codebook subsets and TPMI indices. FIG. 1 corresponds to a table of precoding matrices W for single-layer (rank 1) transmission using four antenna ports in a case that transform precoding (which may be referred to as a transform precoder) is enabled, in Rel-16 NR. In FIG. 1, corresponding W is shown, from left to right in ascending order of TPMI indices.

Such a correspondence relation (which may be referred to as a table) indicating W corresponding to TPMI indices as shown in FIG. 1 is also referred to as a codebook. A part of the codebook is also referred to as a codebook subset.

In FIG. 1, in a case where the codebook subset (codebookSubset) is fullyAndPartialAndNonCoherent, a UE is notified of a TPMI of any one of 0 to 27, for single-layer transmission. In a case where the codebook subset is partialAndNonCoherent, the UE is configured with a TPMI of any one of 0 to 11, for single-layer transmission. In a case where the codebook subset is nonCoherent, the UE is configured with a TPMI of any one of 0 to 3, for single-layer transmission.

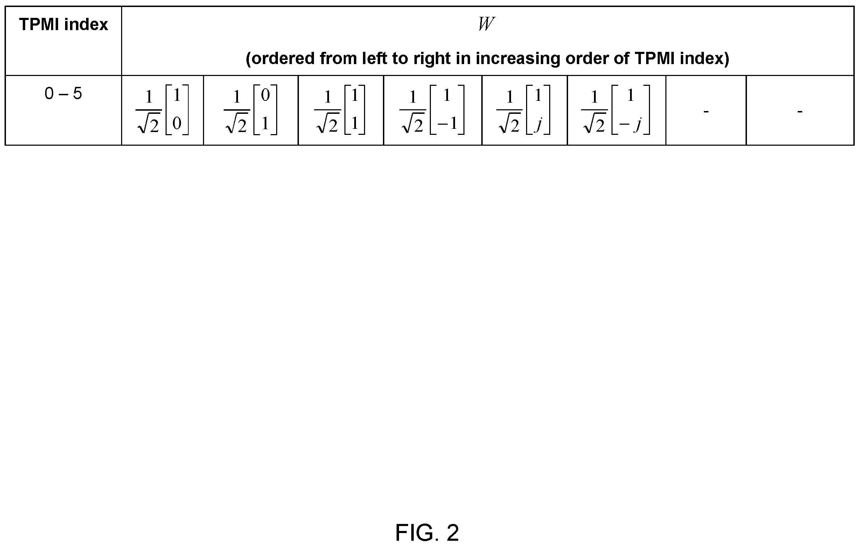

FIG. 2 corresponds to a table of precoding matrices W for single-layer (rank 1) transmission using two antenna ports in Rel-16 NR.

In FIG. 2, TPMIs that a UE is notified of for two-port single-layer transmission are 0 to 5 (the codebook subset is fullyAndPartialAndNonCoherent) or 0 to 1 (the codebook subset is nonCoherent) .

Precoding matrices W for single-layer transmission using four antenna ports in a case that transform precoding is enabled are defined separately from precoding matrices W for single-layer transmission using four antenna ports in a case that transform precoding is disabled. On the other hand, precoding matrices W for single-layer transmission using two antenna ports are in common irrespective of whether transform precoding is enabled or disabled.

Note that a precoding matrix with only one element per column being other than 0 may be referred to as a non-coherent codebook. A precoding matrix with only a specific number of elements per column (more than one but not all elements in a column) being other than 0 may be referred to as a partial-coherent codebook. A precoding matrix with none of the elements per column being 0 may be referred to as a fully-coherent codebook.

The non-coherent codebook and the partial-coherent codebook may each be referred to as an antenna selection precoder, an antenna port selection precoder, or the like. For example, the non-coherent codebook (non-coherent precoder) may be referred to as a one-port selection precoder, a one-port port selection precoder (1-port port selection precoder), or the like. The partial-coherent codebook (partial-coherent precoder) may be referred to as an x-port selection precoder (x is an integer greater than one), an x-port port selection precoder, or the like. The fully-coherent codebook may be referred to as a non-antenna selection precoder, an all-port precoder, or the like.

Note that, in the present disclosure, the partial-coherent codebook may correspond to a codebook (i.e., codebooks with TPMI = 4 to 11, in a case of single-layer transmission with four antenna ports) obtained by excluding a codebook corresponding to a TPMI specified for a UE configured with a non-coherent codebook subset (for example, the RRC parameter "codebookSubset" = "nonCoherent") from codebooks (precoding matrices) corresponding to TPMIs specified, by DCI, for codebook based transmission, for a UE configured with a partial-coherent codebook subset (for example, the RRC parameter "codebookSubset" = "partialAndNonCoherent").

Note that, in the present disclosure, the fully-coherent codebook may correspond to a codebook (i.e., codebooks with TPMI = 12 to 27, in a case of single-layer transmission with four antenna ports) obtained by excluding a codebook corresponding to a TPMI specified for a UE configured with a partial-coherent codebook subset (for example, the RRC parameter "codebookSubset" = "partialAndNonCoherent") from codebooks (precoding matrices) corresponding to TPMIs specified, by DCI, for codebook based transmission, for a UE configured with a fully-coherent codebook subset (for example, the RRC parameter "codebookSubset" = "fullyAndPartialAndNonCoherent").

Hereinafter, in the present disclosure, for simplicity, a non-coherent precoder, a partial-coherent precoder, and a fully-coherent precoder are simply referred to as an NC (non coherent) precoder, a PC (partial coherent) precoder, and an FC (full coherent) precoder, respectively.

Hereinafter, in the present disclosure, for simplicity, an NC/PC/FC precoder for i-layer transmission (i is an integer, i = 1 in a case of single-layer) with n antenna ports (n is an integer) is also simply referred to as an n-port i-layer NC/PC/FC precoder.

Note that, as seen from FIG. 2, no partial-coherent precoder for two-antenna-port transmission is present, and thus a configuration of the codebook subset being partialAndNonCoherent need not be applied to the two antenna ports.

### (Precoding Information Field)

As described above, a UE may judge, based on a precoding information field of DCI (for example, DCI format 0_1/0_2) scheduling a PUSCH, a TPMI and the number of layers (transmission rank) for the PUSCH. Specifically, the UE may judge a TPMI and the number of layers that correspond to a field value notified, with reference to a correspondence relation (table) between values in the precoding information field and the numbers of layers and TPMIs.

Regarding a codebook based PUSCH, the UE may determine the correspondence relation to be referred to on the basis of a configuration of enabling/disabling a transform precoder for the PUSCH (for example, a higher layer parameter "transformPrecoder"), a configuration of a codebook subset for the PUSCH (for example, a higher layer parameter "codebookSubset"), a configuration of the maximum number of layers for the PUSCH (for example, a higher layer parameter "maxRank"), a configuration of uplink full power transmission for the PUSCH (for example, a higher layer parameter "ul-FullPowerTransmission"), the number of antenna ports for the PUSCH, or the like.

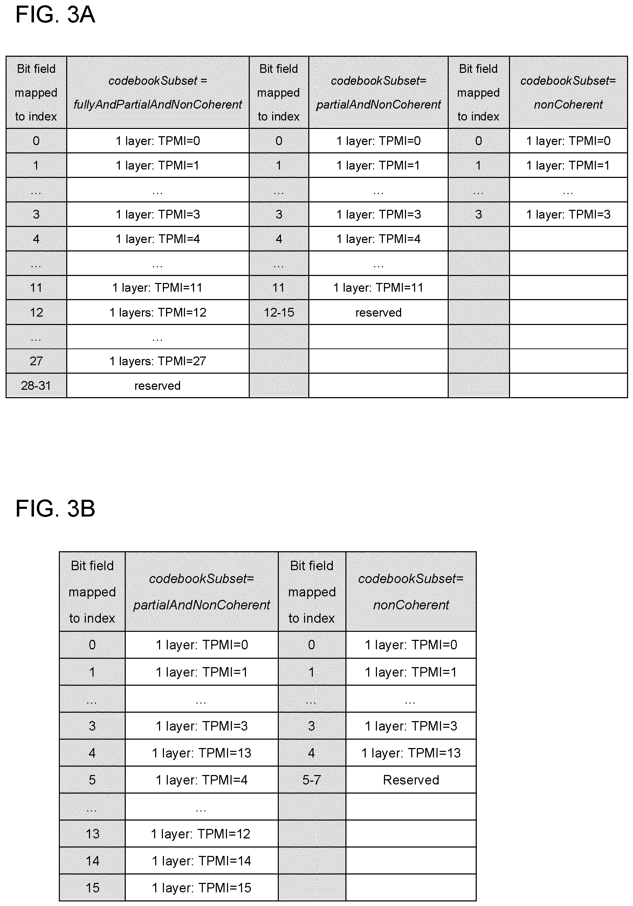

FIGS. 3A and 3B are each a diagram to show an example of a correspondence relation between values in a precoding-information-and-number-of-layers field and the numbers of layers and TPMIs in Rel-16 NR. Note that it should be understood by a person skilled in the art that "Bit field mapped to index" shown in FIGS. 3A and 3B indicates the values in the precoding-information-and-number-of-layers field.

The correspondence relation in FIG. 3A is a correspondence relation for four antenna ports in a case where a transform precoder is configured to be enabled and where no uplink full power transmission is configured or uplink full power transmission is configured with full power mode 2 (fullpowerMode2).

The correspondence relation in FIG. 3B is a correspondence relation for four antenna ports in a case where a transform precoder is configured to be enabled and where uplink full power transmission is configured with full power mode 1 (fullpowerMode1).

In FIG. 3A, the precoding information field has five bits in a case where a codebook subset of full coherent (fullyAndPartialAndNonCoherent) is configured for a UE, has four bits in a case where a codebook subset of partial coherent (partialAndNonCoherent) is configured, and has two bits in a case where a codebook subset of non-coherent (nonCoherent) is configured.

In FIG. 3B, the precoding information field has four bits in a case where a codebook subset of partial coherent (partialAndNonCoherent) is configured for a UE, and has three bits in a case where a codebook subset of non-coherent (nonCoherent) is configured.

Note that, as shown in FIGS. 3A and 3B, the number of layers and a TPMI that correspond to a certain precoding information field value may be the same (common) irrespective of the codebook subset configured for the UE. For example, in FIG. 3A, the numbers of layers and TPMIs that are indicated with precoding information field values = 0 to 3 may be the same for the codebook subsets of full coherent (fullyAndPartialAndNonCoherent), partial coherent (partialAndNonCoherent), and non-coherent (nonCoherent). In FIG. 3A, the numbers of layers and TPMIs that are indicated with precoding information field values = 0 to 11 may be the same for the codebook subsets of full coherent (fullyAndPartialAndNonCoherent) and partial coherent (partialAndNonCoherent).

Note that the precoding information field may have 0 bits for a non-codebook based PUSCH. The precoding information field may have 0 bits for a codebook based PUSCH with one antenna port.

### (Antenna Port Field)

A UE may judge, based on an antenna port field ("Antenna ports" field) in DCI (for example, DCI format 0_1/0_2) that schedules a PUSCH, information related to a demodulation reference signal (DMRS) for the PUSCH (such as the number of DMRS CDM groups without data, a DMRS port (antenna port index), or the number of front-load symbols). Specifically, the UE may judge, with reference to a correspondence relation (table) between values in the antenna port field and the information related to the DMRS, information related to a DMRS corresponding to a field value notified.

The UE may determine the correspondence relation to be referred to on the basis of a configuration of enabling/disabling a transform precoder for the PUSCH (for example, the higher layer parameter "transformPrecoder"), a DMRS type (for example, a higher layer parameter "dmrs-Type"), the maximum length of DMRS (for example, "maxLength"), or the like.

The correspondence relation described above to be referred to by the UE may differ between a case where a parameter indicating enabling of π/2 Binary Phase Shift Keying (BPSK) modulation (for example, a higher layer parameter "tp-pi2BPSK" in PUSCH configuration information) and a parameter indicating whether a DMRS of low peak power to average power ratio (Peak-to-Average Power Ratio (PAPR)) is applied to a PUSCH of π/2 BPSK modulation (for example, "dmrs-UplinkTransformPrecoding-r16") are configured and π/2 BPSK modulation is used (use of π/2 BPSK modulation is specified by a Modulation and Coding Scheme (MCS) field (or MCS index) included in the DCI) and a case otherwise. Note that, in the present disclosure, for simplicity, the former case is also referred to as a "case of using π/2 BPSK modulation," and the latter case is also referred to as a "case of not using π/2 BPSK modulation."

Note that, in the case of using π/2 BPSK modulation, the DMRS port corresponding to the antenna port field is interpreted as a value (also referred to as n_{SCID}) for the DMRS port and DMRS sequence generation. n_{SCID} may be used for initialization of a generator of a sequence (binary sequence, pseudo-random sequence) used for the DMRS sequence generation.

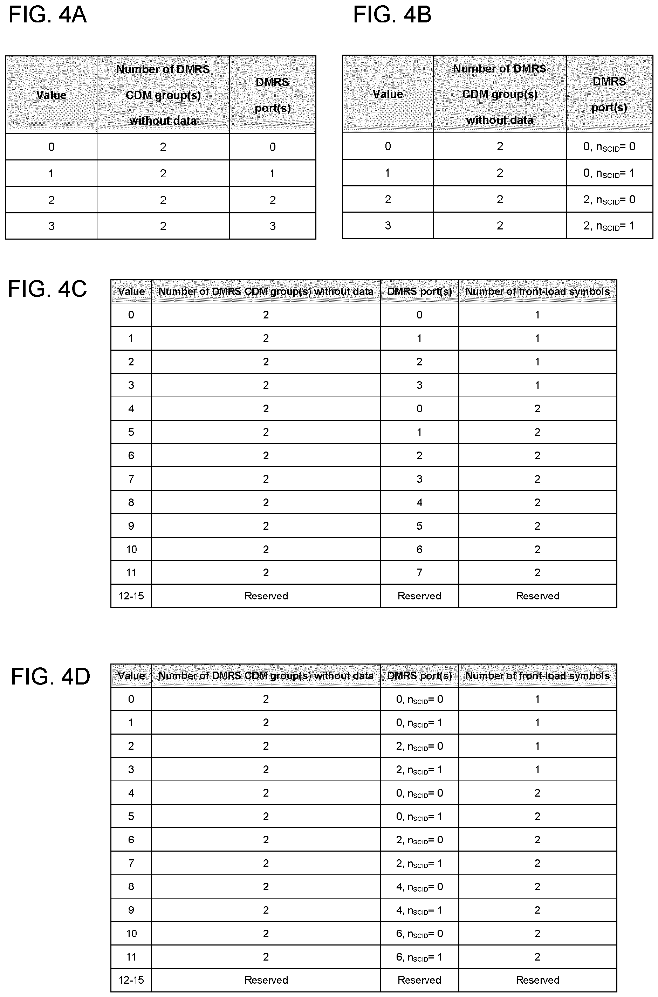

FIGS. 4A to 4D are each a diagram to show an example of a correspondence relation between values in an antenna port field and information related to a DMRS in Rel-16 NR. Note that it should be understood by a person skilled in the art that "Value" shown in FIGS. 4A to 4D indicates values in the antenna port field.

The correspondence relation in FIG. 4A shows a case where a transform precoder is configured to be enabled, DMRS type = 1 and the maximum length of DMRS = 1, and π/2 BPSK modulation is not used.

The correspondence relation in FIG. 4B shows a case where a transform precoder is configured to be enabled, DMRS type = 1 and the maximum length of DMRS = 1, and π/2 BPSK modulation is used.

The correspondence relation in FIG. 4C shows a case where a transform precoder is configured to be enabled, DMRS type = 1 and the maximum length of DMRS = 2, and π/2 BPSK modulation is not used.

The correspondence relation in FIG. 4D shows a case where a transform precoder is configured to be enabled, DMRS type = 1 and the maximum length of DMRS = 2, and π/2 BPSK modulation is used.

### (Transmission with More Than Four Antenna Ports)

In Rel-15/16 NR, uplink (UL) Multi Input Multi Output (MIMO) transmission with up to four layers is supported. For future radio communication systems, in order to achieve higher spectrum efficiency, supporting UL transmission with more than four layers is under study. For example, for Rel-18 NR, transmission with six rank at maximum using six antenna ports, transmission with six or eight rank at maximum using eight antenna ports, and the like are under study.

For example, eight antennas may be arranged in a one dimensional (1 dimensional (1D)) manner or may be arranged in a two dimensional (2 dimensional (2D)) manner. For example, in the former case, an antenna configuration including four cross polarization antennas aligned in the horizontal direction is conceivable. In the latter case, an antenna configuration including two cross polarization antennas aligned in each of the horizontal and vertical directions is conceivable.

Note that the antenna layout is not limited to this. For example, any configuration may be possible for the number of panels the antennas are arranged with, a panel orientation, coherency of each panel/antenna (such as full coherent, partial coherent, or non-coherent), an antenna arrangement in a specific direction (such as horizontal direction or vertical direction), and a polarization antenna configuration (such as single polarization, cross polarization, or the number of polarization surfaces).

Although transmission of one codeword (CW) on one PUSCH is supported in Rel-15/16 NR, for Rel-18 NR, it is under study that a UE transmits more than one CWs on one PUSCH. For example, supporting two-CW transmission for ranks 5 to 8, supporting two-CW transmission for ranks 2 to 8, and the like are under study.

Although, for a UE in Rel. 15 and Rel. 16, it is assumed that only one beam/panel is used for UL transmission in a certain time, for Rel. 17 or later versions, in order to improve UL throughput and reliability, simultaneous UL transmission (for example, PUSCH transmission) with a plurality of beams/plurality of panels for one or more TRPs is under study. Note that simultaneous PUSCH transmission with a plurality of beams/plurality of panels may correspond to PUSCH transmission with more than four layers or may correspond to PUSCH transmission with four or less layers.

A precoding matrix regarding UL transmission using more than four antenna ports (the number of antenna ports more than four) is under study. For example, a codebook for eight-port transmission (which may be referred to as an eight-transmission UL codebook (8 TX UL codebook) or the like) is under study.

Regarding UL transmission using more than four antenna ports (the number of antenna ports more than four), however, progress has not been made with studies on how to determine a precoding matrix. For example, progress has not been made with a study on whether transform precoding is possible to be configured to be enabled for the UL transmission and, if it is possible, on how a UE determines a TPMI, information related to a DMRS, or the like. Unless this is made clear, an increase in communication throughput may be suppressed.

In view of this, the inventors of the present invention came up with the idea of a method of appropriately performing UL transmission using more than four antenna ports.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and **C."**

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna, an antenna element, a layer, a transmission, a port, an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information," or the like. The TCI state and the TCI may be interchangeably interpreted.

In the following embodiments, a "plurality of" and "two" may be interchangeably interpreted.

In the following embodiments, the number of layers for PUSCH transmission may be more than four, or may be four or less. For example, PUSCH transmission of two CWs in the present disclosure may be performed with four or less (for example, two) layers. The maximum number of layers is not limited to four or more, but may be less than four.

Transmission (UL transmission, PUSCH transmission) in the following embodiments may or may not premise use of a plurality of panels (may be applied regardless of panels).

In the present disclosure, "transform precoding is configured" and "transform precoding is configured to be enabled" may be interchangeably interpreted.

Note that, in the present disclosure, "having a capability of ..." and "supporting/reporting a capability of ..." may be interchangeably interpreted.

### (Radio Communication Method)

### <First Embodiment>

A first embodiment relates to transform precoding for transmission using eight antenna ports (also referred to as eight-port transmission).

Note that a case that transform precoding is enabled for a certain signal may mean a case that the signal is transmitted using a Discrete Fourier Transform Spread Orthogonal Frequency Division Multiplexing (DFT-s-OFDM) waveform (or applying transform precoding). A case that transform precoding is disabled for a certain signal may mean a case that the signal is transmitted using a Cyclic Prefix OFDM (CP-OFDM) waveform (or without applying transform precoding).

### {Embodiment 1.1}

For eight-port PUSCH transmission, a UE may support only a CP-OFDM waveform, without supporting transform precoding (DFT-s-OFDM waveform).

For example, a UE configured with eight ports need not anticipate a configuration is made that a parameter (for example, "transformPrecoder") of a transform precoder indicates "enabled" in PUSCH configuration information (for example, "PUSCH-Config" information element of RRC).

In a case where a configuration is made that a parameter (for example, "msg3-transformPrecoder") of a transform precoder for message 3 transmission (in a random access procedure) indicates "enabled", a UE configured with eight ports may anticipate only a configuration is made that a parameter (for example, "transformPrecoder") of a transform precoder indicates "disabled" in PUSCH configuration information (for example, "PUSCH-Config" information element of RRC) (and need not anticipate that no parameter of the transform precoder is present in the PUSCH configuration information). This is because, in an existing standard, it is defined that, in a case where no parameter of the transform precoder is present in the PUSCH configuration information, as the value of the parameter, a value of a parameter of a transform precoder for message 3 transmission is applied.

In Embodiment 1.1, a UE may be configured, by RRC signaling, with either of PUSCH transmission with more than four ports using CP-OFDM or PUSCH transmission with four or less ports using DFT-s-OFDM.

Note that, in Embodiment 1.1, in a case where a base station configures, for a UE, the parameter (for example, "transformPrecoder") of the transform precoder, the base station may perform control that both "enabled" and "disabled" are specifiable when the UE is caused to perform transmission with four or less ports and that only "disabled" is specifiable when the UE is caused to perform transmission with more than four ports.

### {Embodiment 1.2}

For eight-port transmission, a UE may support transform precoding (DFT-s-OFDM waveform). For example, a UE supporting eight-port transmission may support application of transform precoding with a one-layer (in the present disclosure, which may be interchangeably interpreted as single-layer) PUSCH, in addition to CP-OFDM with one- to eight-layer PUSCHs.

For example, a UE configured with eight ports may be configured with a configuration that a parameter (for example, "transformPrecoder") of a transform precoder indicates "enabled" in PUSCH configuration information (for example, "PUSCH-Config" information element of RRC).

### {Embodiment 1.3}

For eight-port transmission, a UE may be configured with transform precoding on the basis of a capability of the UE. For example, a UE that has/supports/is configured with eight ports (or eight-port transmission) may report, to a network, UE capability information indicating supporting of transform precoding with a one-layer PUSCH for the eight-port transmission.

A UE configured with eight ports may be configured with a configuration that a parameter (for example, "transformPrecoder") of a transform precoder indicates "enabled" in PUSCH configuration information (for example, "PUSCH-Config" information element of RRC).

### {Variation of First Embodiment}

Although a PUSCH in the first embodiment is described assuming a PUSCH (dynamic PUSCH) dynamically scheduled by DCI, the PUSCH is not limited to this.

For example, the PUSCH in the first embodiment may be a configured grant PUSCH controlled based on RRC/DCI. In this case, for example, the PUSCH configuration information described above may be interpreted as configured grant PUSCH configuration information (for example, a "ConfiguredGrantConfig" information element of RRC).

The PUSCH in the first embodiment may be a PUSCH in the case of using π/2 BPSK modulation.

For example, in describing with such interpretation applied to Embodiment **1.3,** a UE may report, to a network, UE capability information indicating supporting of transform precoding with a one-layer PUSCH for configured grant configuration, in a case of having/supporting/being configured with eight ports (or eight-port transmission). A UE may report, to a network, UE capability information indicating supporting of a low PAPR DMRS for a PUSCH with transform precoding and with π/2 BPSK modulation, in the case of having/supporting/being configured with eight ports (or eight-port transmission) and of being configured with transform precoding.

Note that, with respect to whether transform precoding is configurable together with a specific or different full power transmission scheme, a UE may be configured by higher layer signaling or may determine on the basis of reporting of a UE capability.

According to the first embodiment described above, whether to apply transform precoding for eight-port transmission can be appropriately judged.

### <Second Embodiment>

A second embodiment relates to a precoding matrix for a single-layer PUSCH with transform precoding for eight-port transmission.

A codebook (a table of precoding matrices W) for a single-layer PUSCH with transform precoding for eight-port transmission may be the same as or different from a codebook for a single-layer PUSCH without transform precoding for eight-port transmission.

A codebook for a single-layer PUSCH with transform precoding for eight-port transmission may include precoding matrices W based on a two-/four-port one-layer NC precoder/PC precoder/FC precoder. Note that the two-/four-port one-layer NC precoder/PC precoder/FC precoder may include a precoder (for example, included in FIG. 1) defined in an existing standard or may include a precoder not in any existing standard.

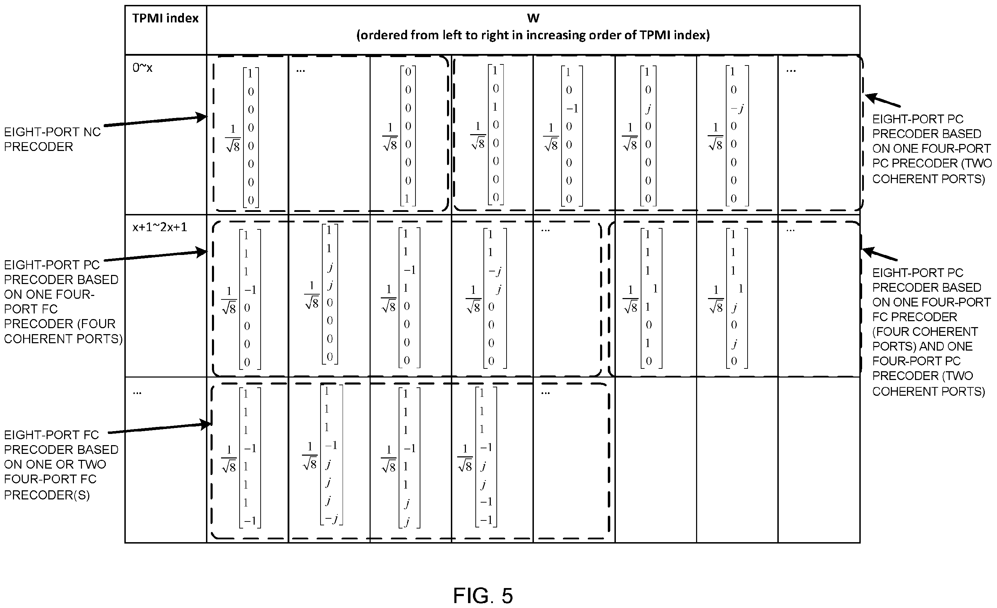

FIG 5 is a diagram to show an example of a codebook according to the second embodiment. This example corresponds to a table of precoding matrices W for single-layer (rank 1) transmission using eight antenna ports in a case that transform precoding is enabled. The precoder referred to in this example is a one-layer precoder, and thus "one-layer" is omitted for description.

**Note that** each eight-port NC/PC/FC precoder is scaled (adjusted) such that the coefficient (or the absolute value of each component) is 1/√8 (or a specific value), but this is not restrictive.

The codebook may include an eight-port NC precoder. The eight-port NC precoder may be a precoder selecting one port out of eight ports. Note that eight patterns are conceivable for the eight-port NC precoder, but the codebook need not include all the patterns.

The codebook may include an eight-port PC precoder. The eight-port PC precoder may include, for example, at least one of the following:
- Eight-port PC precoder based on one four-port PC precoder (two coherent ports)
- Eight-port PC precoder based on one four-port FC precoder (four coherent ports)
- Eight-port PC precoder based on one four-port FC precoder (four coherent ports) and one four-port PC precoder (two coherent ports)

The codebook may include an eight-port FC precoder. The eight-port FC precoder may include, for example, at least one of the following:
- Eight-port FC precoder based on one or two four-port FC precoder(s)
- A precoder W_{i_{1,1},i_{1,2},i_{2}} ⁽¹⁾ of a DL-type-I single-panel codebook (or a precoder obtained by extending/deforming the precoder) in an existing Rel-15/16 NR

Note that, with respect to each precoder in this example, co-phasing from a precoder that the precoder based on may be taken into account or may not be taken into account. Note that, co-phasing may be interchangeably interpreted as phase matching, phase compensation, or the like.

The second embodiment described above allows an eight transmission UL codebook to be appropriately used.

### <Third Embodiment>

A third embodiment relates to a correspondence relation between values in a precoding-information-and-number-of-layers field and the numbers of layers and TPMIs, for a single-layer PUSCH with transform precoding for eight-port transmission.

The correspondence relation between the values in the precoding-information-and-number-of-layers field and the numbers of layers and TPMIs, for the single-layer PUSCH with transform precoding for the eight-port transmission, may differ between a case where no uplink full power transmission is configured or uplink full power transmission is configured with full power mode 2 (fullpowerMode2) and a case where uplink full power transmission is configured with full power mode 1 (fullpowerMode1). Such correspondence relations for the respective cases may be based on the correspondence relations shown in FIGS. 3A and 3B.

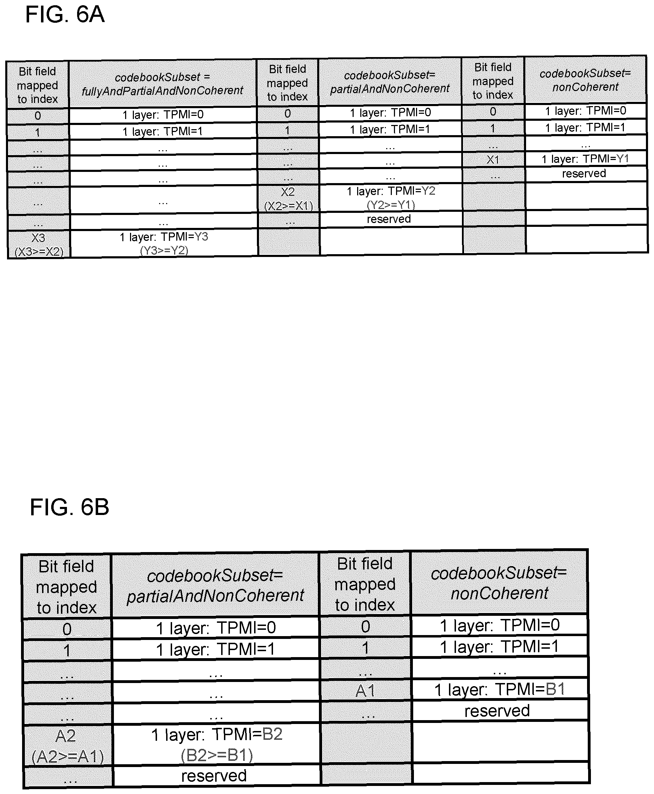

FIGS. 6A and 6B are each a diagram to show an example of a correspondence relation between values in a precoding-information-and-number-of-layers field and the numbers of layers and TPMIs according to the third embodiment.

The correspondence relation in FIG. 6A is a correspondence relation for eight antenna ports in a case where a transform precoder is configured to be enabled and where no uplink full power transmission is configured or uplink full power transmission is configured with full power mode 2 (fullpowerMode2).

The correspondence relation in FIG. 6B is a correspondence relation for eight antenna ports in a case where a transform precoder is configured to be enabled and where uplink full power transmission is configured with full power mode 1 (fullpowerMode1).

In FIG. 6A, the precoding information field is possible to express up to the following value:
- In a case of configuring a codebook subset of non-coherent (nonCoherent): X1 (X1 is an integer) corresponding to TPMI = Y1 (Y1 is an integer)
- In a case of configuring a codebook subset of partial coherent (partialAndNonCoherent): X2 (X2 ≥ X1) corresponding to TPMI = Y2 (Y2 ≥ Y1)
- In a case of configuring a codebook subset of full coherent (fullyAndPartialAndNonCoherent): X3 (X3 ≥ X2) corresponding to TPMI = Y3 (Y3 ≥ Y2)

In FIG. 6B, the precoding information field is possible to express up to the following value:
- In a case of configuring a codebook subset of non-coherent (nonCoherent): A1 (A1 is an integer) corresponding to TPMI = B1 (B1 is an integer)
- In a case of configuring a codebook subset of partial coherent (partialAndNonCoherent): A2 (A2 ≥ A1) corresponding to TPMI = B2 (B2 ≥ B1)

Here, Y1/Y2/Y3/B1/B2 being the maximum TPMI index and the size of the precoding information field may be related to a codebook in the second embodiment or may be configured for a UE by higher layer signaling.

Note that, in the correspondence relation in the third embodiment, only one layer may be specified.

According to the third embodiment described above, a UE can appropriately acquire a TPMI index on the basis of a precoding matrix field.

### <Fourth Embodiment>

A fourth embodiment relates to, for a single-layer PUSCH with transform precoding for eight-port transmission, a correspondence relation between antenna port field values and information related to a DMRS for the PUSCH.

For a single-layer PUSCH with transform precoding for eight-port transmission, a correspondence relation between antenna port field values and information related to a DMRS for the PUSCH may differ between the case of using π/2 BPSK modulation and the case of not using π/2 BPSK modulation.

For a single-layer PUSCH with transform precoding for eight-port transmission, a correspondence relation between antenna port field values and information related to a DMRS for the PUSCH may differ depending on DMRS configuration for the eight-port transmission. Such DMRS configuration may include, for example, at least one of the following:
- DMRS type = 1 and the maximum length of DMRS = 2
- DMRS type = 1 and the maximum length of DMRS = 2 and doubled ports
- DMRS type = 1 and the maximum length of DMRS = 1 and doubled ports
- DMRS type = 2 and the maximum length of DMRS = 2 and doubled ports
- DMRS type = 2 and the maximum length of DMRS = 1 and doubled ports

For example, the correspondence relation in the case of DMRS type = 1 and the maximum length of DMRS = 2 may be the correspondence relation in FIG. 4C/FIG. 4D, may be a correspondence relation based on this, or may be a correspondence relation newly defined.

Entries (information related to a DMRS corresponding to one antenna port field value) in the correspondence relation newly defined are each preferred to indicate one DMRS port (and one n_{SCID}), for indication of a one-layer PUSCH.

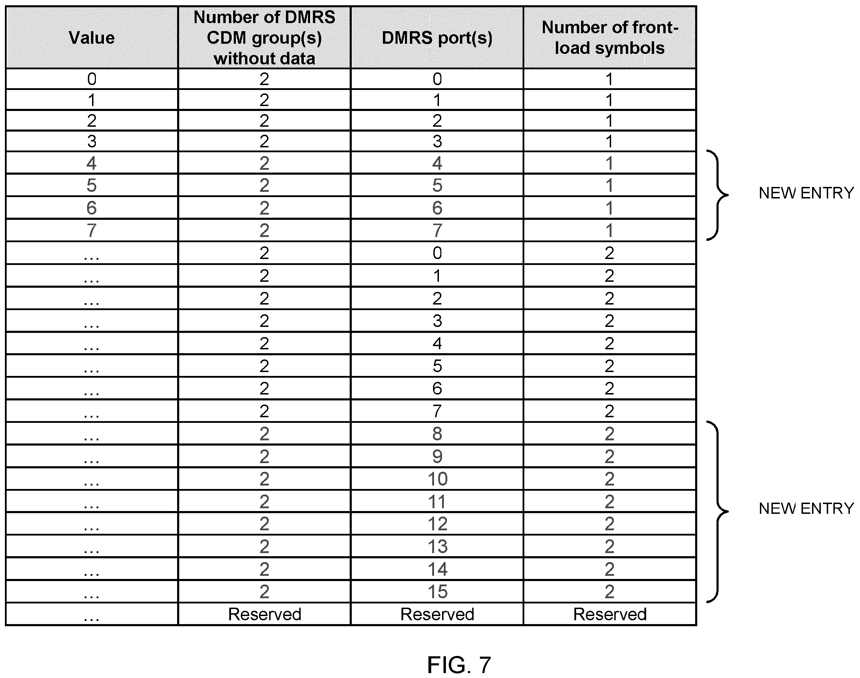

FIG. 7 is a diagram to show an example of a correspondence relation between values in an antenna port field and information related to a DMRS according to the fourth embodiment. The correspondence relation in FIG. 7 shows a case where a transform precoder is configured to be enabled, DMRS type = 1 and the maximum length of DMRS = 2 and doubled ports, and π/2 BPSK modulation is not used.

This example corresponds to a correspondence relation obtained by adding, to that of FIG. 4C, a new entry illustrated in order to deal with doubled ports. Although, in FIG. 4C, up to four DMRS ports per one DMRS symbol are supported, in this example, up to eight DMRS ports per one DMRS symbol are supported. In this example, it is seen that the size of the antenna port field is large as compared to that of FIG. 4C.

According to the fourth embodiment described above, a UE can appropriately acquire information related to a DMRS on the basis of an antenna port field.

### <Supplements>

Note that the number "8" in the present disclosure may be interpreted as any number greater than 4 (for example, 6, 10, 12, 16, ...) or may be interpreted as any number equal to or smaller than 4 (for example, 1, 2, 3, 4). In a case where such interpretation is made, any number premising "8" in the embodiments described above may be appropriately interpreted. It should be understood by a person skilled in the art that such interpretation is described in the present disclosure. For example, in a case where "8" is interpreted as "6," an eight-port i-layer PC precoder configured inserting four (or six) rows of zero elements into an existing PC/FC precoder of four (or two) ports may be interpreted as a six-port i-layer PC precoder configured inserting two (or four) rows of zero elements.

### {Notification of Information to UE}

In the embodiments described above, notification of any information to a UE (from a network (NW) (for example, a base station (BS))) (in other words, reception at the UE of any information from the BS) may be performed using physical layer signaling (for example, DCI), higher layer signaling (for example, RRC signaling, MAC CE), a specific signal/channel (for example, PDCCH, PDSCH, reference signal), or a combination of these.

In a case where the notification is performed by a MAC CE, the MAC CE may be identified by a fact that a new logical channel ID (LCID) not defined in any existing standard is included in a MAC sub-header.

In a case where the notification is performed by DCI, the notification may be made by a specific field in the DCI, a radio network temporary identifier (RNTI) used for scrambling of a cyclic redundancy check (CRC) bit added to the DCI, a format of the DCI, or the like.

Notification of any information to the UE in the embodiments described above may be performed periodically, semi-persistently, or aperiodically.

### {Notification of Information from UE}

In the embodiments described above, notification of any information from a UE (to an NW) (in other words, transmission by the UE of any information to a BS) may be performed using physical layer signaling (for example, UCI), higher layer signaling (for example, RRC signaling, MAC CE), a specific signal/channel (for example, PUCCH, PUSCH, PRACH, reference signal), or a combination of these.

In a case where the notification is performed by a MAC CE, the MAC CE may be identified by a fact that a new LCID not defined in any existing standard is included in a MAC sub-header.

In a case where the notification is performed by UCI, the notification may be transmitted using a PUCCH or PUSCH.

Notification of any information from the UE in the embodiments described above may be performed periodically, semi-persistently, or aperiodically.

### {Application of Embodiments}

At least one of the above-described embodiments may be applied to a case where a specific condition is met. The specific condition may be defined in a standard or may be notified, for a UE/BS, using higher layer signaling/physical layer signaling.

At least one of the above-described embodiments may be applied only to a UE that has reported a specific UE capability or that supports the specific UE capability.

The specific UE capability may indicate at least one of the following:
- Support of processing/operation/control/information related to at least one of the embodiments described above
- Support of PUSCH transmission using more than four antenna ports
- Support of an eight-port m-layer NC/PC/FC precoder (m = **1,** 2, ...)
- Support of (determination of) an eight-port PC precoder based on an existing two-/four-port NC/PC/FC precoder
- Support of transform precoding for eight-port transmission

The specific UE capability may be a capability applied over all the frequencies (commonly irrespective of frequency), may be a capability per frequency (for example, a cell, a band, a band combination, a BWP, a component carrier, or a combination of these), may be a capability per frequency range (for example, FR1, FR2, FR3, FR4, FR5, FR2-1, FR2-2), may be a capability per subcarrier spacing (SCS), or may be a capability per a Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or per frequency division duplex (FDD)).

At least one of the above-described embodiments may be applied to a case where specific information related to any one of the above-described embodiments (or performing of an operation in the embodiments) is configured/activated/triggered for a UE by higher layer signaling/physical layer signaling. Examples of the specific information may include configuration information for a PUSCH using more than four antenna ports, information indicating that a precoder determination/selection/judgement method of at least one of the above-described embodiments is used, information indicating enabling of transform precoding for eight-port transmission, and any RRC parameter for a specific release (for example, Rel. 18).

In a case where at least one of the specific UE capabilities described above is not supported or the specific information is not configured for a UE, the UE may apply an operation in Rel. 15/16, for example.

### (Supplementary Note)

Regarding one embodiment of the present disclosure, the following supplementary notes of the invention will be given.

### {Supplementary Note 1}

A terminal including:
a receiving section that receives information indicating enabling of transform precoding for eight-port transmission; and
a control section that controls the eight-port transmission with transform precoding applied.

### {Supplementary Note 2}

The terminal according to supplementary note 1, wherein a codebook indicating a precoding matrix for the eight-port transmission is different from a codebook for eight-port transmission without transform precoding.

### {Supplementary Note 3}

The terminal according to supplementary note 1 or 2, wherein a size of a precoding-information-and-number-of-layers field included in downlink control information for scheduling of the eight-port transmission is related to a codebook indicating a precoding matrix for the eight-port transmission.

### {Supplementary Note 4}

The terminal according to any one of supplementary notes 1 to 3, wherein a correspondence relation between a value of an antenna port field included in downlink control information for scheduling of the eight-port transmission and information related to a demodulation reference signal (DMRS) differs between a case of using π/2 Binary Phase Shift Keying (BPSK) modulation and a case of not using π/2 BPSK modulation.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

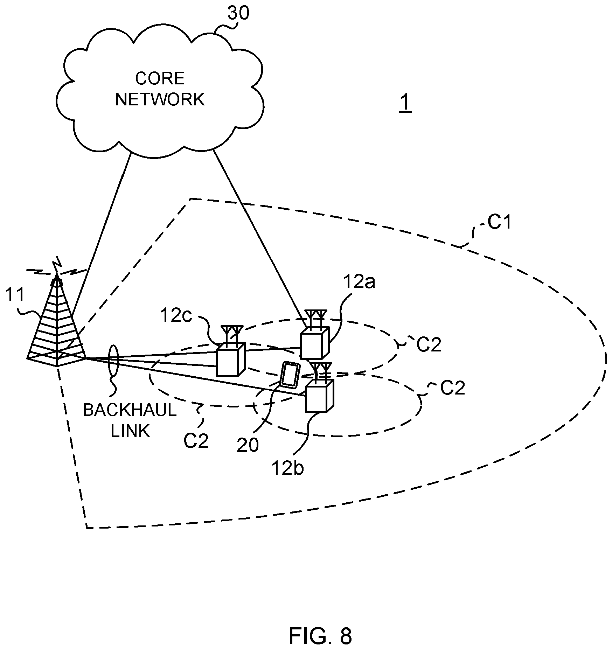

FIG. 8 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF) such as a User Plane Function (UPF), an Access and Mobility management Function (AMF), a Session Management Function (SMF), Unified Data Management (UDM), an ApplicationFunction (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (sounding reference signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

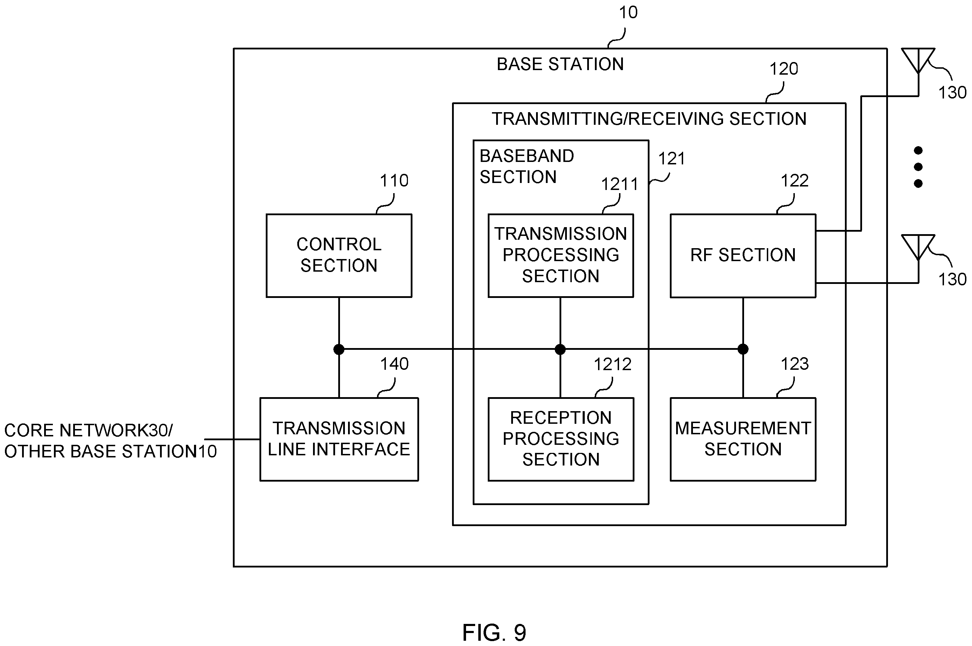

FIG. 9 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may transmit/receive (perform backhaul signaling of) a signal with an apparatus (for example, a network node providing NFs) included in the core network 30 or other base stations 10, and so on, and may acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit, to the user terminal 20, information indicating enabling of transform precoding for eight-port transmission. The transmitting/receiving section 120 may receive the eight-port transmission transmitted with transform precoding applied.

### (User Terminal)

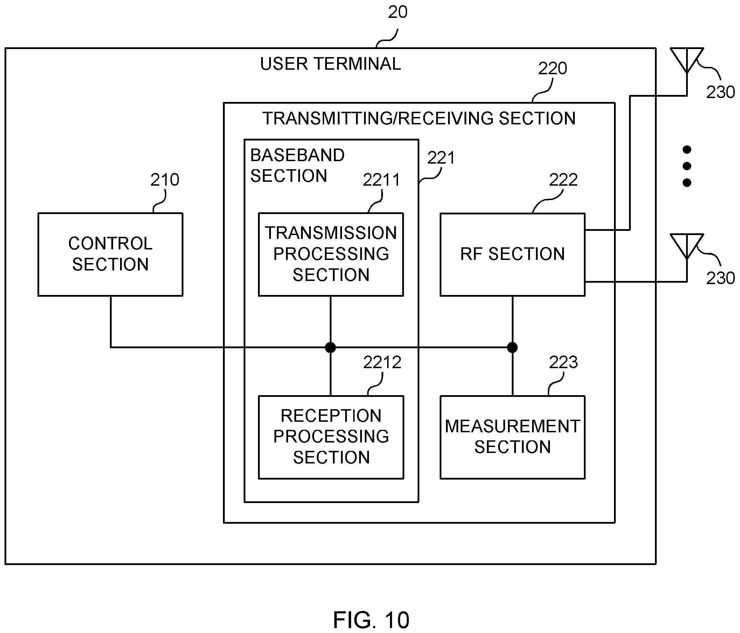

FIG. 10 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive information indicating enabling of transform precoding for eight-port transmission. The control section 210 may control the eight-port transmission with transform precoding applied.

A codebook indicating a precoding matrix for the eight-port transmission may be different from a codebook for eight-port transmission without transform precoding.

A size of a precoding-information-and-number-of-layers field included in downlink control information for scheduling of the eight-port transmission may be related to a codebook indicating a precoding matrix for the eight-port transmission.

A correspondence relation between a value of an antenna port field included in downlink control information for scheduling of the eight-port transmission and information related to a demodulation reference signal (DMRS) may differ between a case of using π/2 Binary Phase Shift Keying (BPSK) modulation and a case of not using π/2 BPSK modulation.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

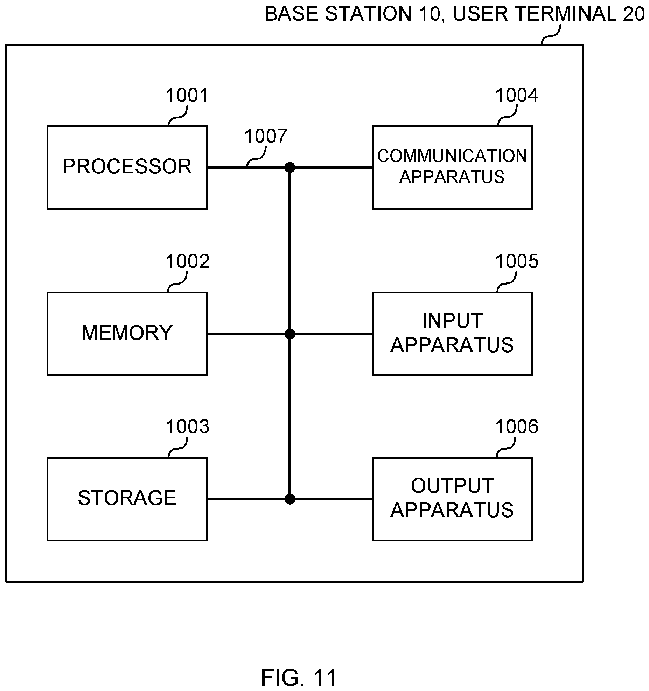

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, or the like may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "being X") does not necessarily have to be notified explicitly, and may be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal may be interchangeably interpreted as a case that the base station indicates, for the terminal, control/operation based on the information.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

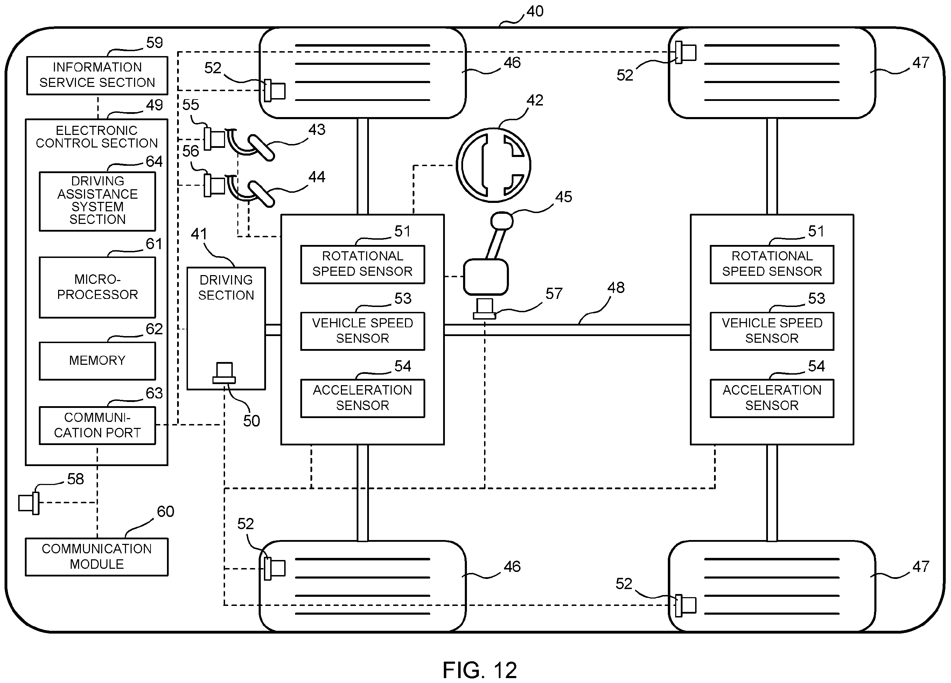

FIG. 12 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of operations. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some operation.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be interchangeably interpreted. In the present disclosure, words such as "good," "poor," "large," "small," "high," "low," "early," "late," "wide," "narrow," and the like may be interchangeably interpreted irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be interchangeably interpreted irrespective of positive degree, comparative degree, and superlative degree (for example, "highest" may be interpreted as "i-th highest," and vice versa).

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives information indicating enabling of transform precoding for eight-port transmission; and
a control section that controls the eight-port transmission with transform precoding applied.

2. The terminal according to claim 1, wherein
a codebook indicating a precoding matrix for the eight-port transmission is different from a codebook for eight-port transmission without transform precoding.

3. The terminal according to claim 1, wherein
a size of a precoding-information-and-number-of-layers field included in downlink control information for scheduling of the eight-port transmission is related to a codebook indicating a precoding matrix for the eight-port transmission.

4. The terminal according to claim 1, wherein
a correspondence relation between a value of an antenna port field included in downlink control information for scheduling of the eight-port transmission and information related to a demodulation reference signal (DMRS) differs between a case of using π/2 Binary Phase Shift Keying (BPSK) modulation and a case of not using n/2 BPSK modulation.

5. A radio communication method for a terminal, the radio communication method comprising:
receiving information indicating enabling of transform precoding for eight-port transmission; and
controlling the eight-port transmission with transform precoding applied.

6. A base station comprising:
a transmitting section that transmits, to a terminal, information indicating enabling of transform precoding for eight-port transmission; and
a receiving section that receives the eight-port transmission transmitted with transform precoding applied.
